Europäisches Patentamt

European Patent Office

Office européen des brevets

(11) Veröffentlichungsnummer: **0 006 660**
A1

# (12) EUROPÄISCHE PATENTANMELDUNG

(21) Anmeldenummer: 79200318.8

(22) Anmeldetag: 20.06.79

(51) Int. Cl.³: **D 21 G 3/00,** G 05 D 23/19

(30) Priorität: 28.06.78 DE 2828339

(71) Anmelder: **ER-WE-PA Maschinefabrik und Eisengiesserei Herbert Karl Schmidt, Mettmanner Strasse 49/51, D-4006 Erkrath (DE)**

(43) Veröffentlichungstag der Anmeldung: **09.01.80 Patentblatt 80/1**

(72) Erfinder: **Bolender, Walter, Rathelbeckerweg 21, D-4006 Erkrath 1 (DE)**

(84) Benannte Vertragsstaaten: **AT BE CH FR GB IT LU NL SE**

(74) Vertreter: **Feder, Heinz, Dr. et al, Postfach 11 04 26, D-4000 Düsseldorf 11 (DE)**

(54) Verfahren und Vorrichtung zur Einstellung und Aufrechterhaltung einer bestimmten Durchbiegung des Schaberbalkens an einem, an einer seiner Längsseiten einer einseitigen Erwärmung ausgesetzten, an einer Walze, insbesondere einem Glätt- oder Trockenzylinder einer Papiermaschine, angeordneten Schaber.

(57) Ein Verfahren sowie eine Einrichtung zur Einstellung und Aufrechterhaltung einer bestimmten Durchbiegung am Schaberbalken (2) eines Schabers, der an einer Walze (1), beispielsweise dem Trockenzylinder einer Papiermaschine, angeordnet ist und einer einseitigen Erwärmung ausgesetzt ist. Es werden Temperaturdifferenzen zwischen verschiedenen Punkten (11, 12) am Schaberbalken (2) bestimmt und Teile (4) des Schaberbalkens (2), die geringerer Erwärmung ausgesetzt sind, in Abhängigkeit von den gemessenen Temperaturdifferenzen aufgeheizt. Zweckmäßig erfolgt die Bestimmung der Temperaturdifferenzen durch elektrische Temperaturfühler, die mit einem Regelkreis (13) verbunden sind, der einen elektrischen Heizkreis (14, 15) steuert. Das Verfahren und die Einrichtung sind besonders gut bei Elektroschabern anwendbar. Es ist eine ausgezeichnete Regelung der Durchbiegung des Schaberbalkens möglich.

EP 0 006 660 A1

DR. HEINZ FEDER                    DR. WOLF-D. FEDER

Patentanwälte
Düsseldorf

0006660

Verfahren und Vorrichtung zur Einstellung
und Aufrechterhaltung einer bestimmten Durchbiegung des Schaberbalkens an einem, an einer
seiner Längsseiten einer einseitigen Erwärmung
ausgesetzten, an einer Walze, insbesondere
einem Glätt- oder Trockenzylinder einer
Papiermaschine, angeordneten Schaber.

Die vorliegende Erfindung betrifft einen an einer Walze,
insbesondere am Glätt- oder Trockenzylinder einer Papiermaschine angeordneten Schaber.

Derartige Schaber werden an den Glätt- und Trockenzylindern von Papiermaschinen für verschiedene Zwecke eingesetzt. Sie dienen zur Abnahme der Bahn vom Zylinder, zur
Behandlung beispielsweise Glättung oder Kreppung einer
auf dem Zylinder befindlichen Bahn oder auch zur Reinigung
der Zylinderoberfläche nach Abnahme der Bahn.

Es sind mechanische Schaber bekannt, bei denen an einem
Schaberbalken eine Schaberklinge aus Metall oder Kunststoff gehaltert ist. Der Schaberbalken ist im allgemeinen
über eine Schwenkvorrichtung so bewegbar, daß die Klinge
mit einem vorgegebenen Druck an die Zylinderoberfläche
ansetzbar ist.

Es sind weiterhin sogenannte "Elektroschaber" bekannt
(s. z.B. "Wochenblatt für Papierfabrikation" 103,
Seite 734-735 (1975) Nr. 19).

Beim Elektroschaber ist an der der Zylinderoberfläche zugewandten Seite des Schaberbalkens ein zur Zylinderoberfläche hin offener Raum vorgesehen, in dem eine an eine Stromquelle anschließbare Platinelektrode angeordnet ist. Der offene Raum ist an seinen Rändern von Abdichtungskissen begrenzt. Beim Anschwenken des Schaberbalkens an den Zylinder legen sich die Abdichtungskissen an die Zylinderoberfläche an, so daß ein geschlossener Raum entsteht, in dem sich die Platinelektrode in einem vorgegebenen Abstand von einigen Millimetern von der Zylinderoberfläche befindet. Durch den Schaberbalken hindurch wird dem Raum zwischen der Platinelektrode und der Zylinderoberfläche ein Elektrolyt im Kreislauf zu- und wieder abgeführt. Es wird so in bekannter und in der oben zitierten Druckschrift beschriebener Weise auf der Zylinderoberfläche ein Korrosionsschutz- und Reinigungseffekt erzeugt.

Es ist weiterhin bekannt, daß die Glätt- und Trockenzylinder einer Papiermaschine in ihrer Längsrichtung eine gewisse Wölbung nach außen, die Bombierung, aufweisen, an welche die Schaber durch eine entsprechende Wölbung nach innen angepaßt sein müssen, damit sie während des Betriebes überall gleichmäßig mit möglichst einheitlicher Druckverteilung an der Zylinderoberfläche anliegen, so daß weder eine vom Schaber unberührte Stelle, noch eine Beschädigung der Zylinderoberfläche auftreten können.

Es hat sich nun gezeigt, daß die Anpassung der Wölbung der Schaber an die Bombierung der Zylinderoberfläche sehr schwer durchzuführen und aufrechtzuerhalten ist, wenn der Schaber während des Betriebes an einer seiner Längsseiten einseitig einer starken Erwärmung ausgesetzt ist.

Dies kann bei einem mechanischen Schaber dadurch geschehen, daß durch die Wärmeabstrahlung von dem im allgemeinen auf eine Temperatur von 80 bis 130°C aufgeheizten Glätt- oder Trockenzylinder sich der Schaberbalken an der dem Zylinder zugewandten Seite gegenüber der vom Zylinder abgewandten Seite erwärmt. Diese einseitige Erwärmung hat eine einseitige Längenausdehnung am Schaberbalken zur Folge, die zu einer Durchbiegung des Schaberbalkens in Richtung auf den Zylinder hinführt. Dadurch wird aber eine vorher vorgenommene Anpassung der Wölbung des Schaberbalkens an die Bombierung des Zylinders reduziert oder aufgehoben. Es kann geschehen, daß der Schaber bzw. die Schaberklinge an den Seiten des Zylinders nicht mehr aufliegt, oder daß, wenn dieser Effekt durch stärkeren Anpreßdruck ausgeglichen werden soll, Beschädigungen oder zumindestens eine wesentlich stärkere Abnutzung der Zylinderoberfläche eintreten.

Versuche, den Schaber mechanisch, etwa durch Stellschrauben, nachzujustieren, haben diese Nachteile nicht beheben können.

Bei einem Elektroschaber ergibt sich eine einseitige Erwärmung des Schaberbalkens dadurch, daß sich der Elektrolyt während des Betriebes durch Berührung mit der warmen Zylinderoberfläche aufheizt. Die einseitige Erwärmung des Schaberbalkens erfolgt also hier in erster Linie durch Wärmeleitung und Konvektion und zusätzlich durch Wärmestrahlung.

Es hat sich gezeigt, daß die dabei auftretenden Durchbiegungseffekte beträchtlich sind und sehr rasch zu einer Beschädigung der Zylinderoberfläche führen.

So wurde beispielsweise bei einer Arbeitsbreite von 6 m und einer Temperaturdifferenz zwischen Vorder- und Rückseite des Schaberbalkens von 70°C eine Durchbiegung gemessen, bei der der Mittelpunkt des Schaberbalkens um ca. 6 mm in Richtung auf den Zylinder hin versetzt wurde. Hinzu kommt, daß auch die Bombierung des Zylinders während des Betriebes infolge der Erwärmung zunimmt. Da beim Elektroschaber der Abstand der Elektroden von der Zylinderoberfläche nur wenige Millimeter betragen soll, ist ersichtlich, daß eine solche Durchbiegung vor allem bei einem Elektroschaber zu großen Schwierigkeiten führt, weil entweder bei zu großem Abstand eine gleichmäßige Abdichtung des Raumes zwischen der Elektrode und der Zylinderoberfläche nicht gelingt, oder bei zu kleinem Abstand die Elektrode die Zylinderoberfläche selbst berührt und dabei gar beschädigt. Es hat sich gezeigt, daß ein Elektroschaber bei größeren Arbeitsbreiten ohne die Möglichkeit einer Nachjustierung der Durchbiegung des Schaberbalkens gar nicht einsetzbar ist.

Insbesondere hat sich gezeigt, daß bei einem Papierbahnabriß sich die Temperatur des Glättzylinders innerhalb eines sehr kurzen Zeitraumes von beispielsweise 30 Sekunden um etliche Grad Celsius erhöht, wobei die Zylinderdurchbiegung um ca. 0,6 mm wächst. Hierbei erwärmt sich der Elektrolyt soweit, daß er in kürzester Zeit den Siedepunkt erreicht. Dies hat zur Folge, daß sich auch der Schaberbalken in sehr kurzer Zeit zum Glättzylinder hin verformt, wobei eine verstärkte Gefahr

- 5 -

der Berührung zwischen Elektroden und Zylinderoberfläche
entsteht und zusätzlich Abdichtungsprobleme bezüglich
des Elektrolyten auftreten.

Gegenstand der Erfindung ist ein Verfahren zur Einstellung und Aufrechterhaltung einer bestimmten Durchbiegung des Schaberbalkens an einem an einer seiner Längsseiten einer einseitigen Erwärmung ausgesetzten, an einer
Walze, insbesondere einem Glätt- oder Trockenzylinder
einer Papiermaschine, angeordneten Schaber, wobei die
der Erfindung zugrunde liegende Aufgabe darin besteht,
ein Verfahren zu schaffen, das sowohl beim mechanischen
als auch insbesondere bei Elektroschabern anwendbar
ist und mit dem ein selbsttätiges Nachjustieren bzw. eine
Regelung der Durchbiegung des Schaberbalkens auf einen
vorgegebenen Wert durchgeführt werden kann.

Die Lösung dieser Aufgabe geschieht erfindungsgemäß
dadurch, daß jeweils an mindestens einem Punkt der
größerer Erwärmung ausgesetzten Seite und mindestens
einem Punkt der geringerer Erwärmung ausgesetzten Seiten des Schaberbalkens die Temperatur gemessen und die
Temperaturdifferenz bzw. - differenzen zwischen den
Punkten auf diesen Seiten bestimmt wird und mindestens
Teile der geringerer Erwärmung ausgesetzten Seiten
des Schaberbalkens in Abhängigkeit von mindestens einer
der gemessenen Temperaturdifferenzen aufgeheizt werden,
bis mindestens eine der gemessenen Temperaturdifferenzen
einen vorgegebenen Wert erreicht.

Gegenstand der Erfindung ist weiterhin eine Einrichtung
zur Durchführung des erfindungsgemäßen Verfahrens, die
gemäß der weiteren Erfindung dadurch gegeben ist, daß am oder im Schaberbalken an einer Stelle, die großer Erwärmung ausgesetzt ist, mindestens ein erster elektrischer Temperaturfühler und an einer Stelle, die geringerer Erwärmung ausgesetzt ist, mindestens ein zweiter elektrischer Temperaturfühler angeordnet ist und die beiden Temperaturfühler mit einem elektrischen Regelkreis verbunden sind, der ein von der gemessenen Temperaturdifferenz abhängiges Steuersignal erzeugt, mit dem ein elektrischer Heizkreis angesteuert wird, der ein oder mehrere Heizbänder aufweist, die an vorgegebenen geringerer Erwärmung ausgesetzten Stellen an der Außenseite des Schaberbalkens angeordnet sind.

Vorteilhafte Ausführungsformen der erfindungsgemäßen Einrichtung sind Gegenstand der Unteransprüche.

Durch das erfindungsgemäße Verfahren und die erfindungsgemäße Einrichtung ist es möglich, die Durchbiegung des Schaberbalkens so zu regeln, daß in allen Betriebszuständen eine optimale Anpassung an die Bombierung der Oberfläche der Walze bzw. des Glätt- oder Trockenzylinders gegeben ist.

Bei mechanischen Schabern hat dies zur Folge, daß infolge der gleichmäßigen Anlage der Schaberklinge an der Walzenoberfläche mit wesentlich niedrigeren Anpreßdrücken gearbeitet werden kann, und somit einerseits eine geringere Abbremsung der Walze und dadurch Einsparung von Antriebsenergie, eine wesentlich längere Standzeit der Oberfläche der Walze und ein geringerer Klingenverschleiß err'eicht werden.

Bei Elektroschabern wird eine Abstandsreduzierung der Elektroden von der Walzenoberfläche und damit einerseits eine Einsparung an elektrischer Energie und eine bessere Wirksamkeit des Schabers über die volle Arbeitsbreite erreicht. Andererseits werden Beschädigungen der Walzenoberfläche und schlechtes Abdichten des Elektrolytraumes vermieden.

Es hat sich gezeigt, daß mit dem erfindungsgemäßen Verfahren und der erfindungsgemäßen Einrichtung eine so rasch ansprechende Regelung der Durchbiegung des Schaberbalkens möglich ist, daß auch bei dem oben geschilderten Papierbahnabriß sich die Durchbiegung des Schaberbalkens sofort den neuen Gegebenheiten anpaßt und ein Abschwenken des Schaberbalkens nicht erforderlich ist.

Bei beiden Schabertypen ergeben sich beträchtliche Konstruktionsvereinfachungen.

Im folgenden werden anhand der beigefügten Zeichnungen Ausführungsbeispiele für das erfindungsgemäße Verfahren und die erfindungsgemäße Einrichtung näher erläutert.

Fig. 1 zeigt in geschnittener, schematischer Darstellung einen Elektroschaber mit einer Einrichtung gemäß der Erfindung.

Fig. 2 zeigt ebenfalls in stark schematisierter Darstellung einen Längsschnitt durch den Schaber nach Fig. 1.

Fig. 3 zeigt einen Elektroschaber nach Fig. 1 im an- und abgeschwenkten Zustand.

Fig. 4 zeigt ebenfalls in schematischer Darstellung drei an einem Glättzylinder angeordnete mechanische Schaber mit Einrichtungen nach der Erfindung.

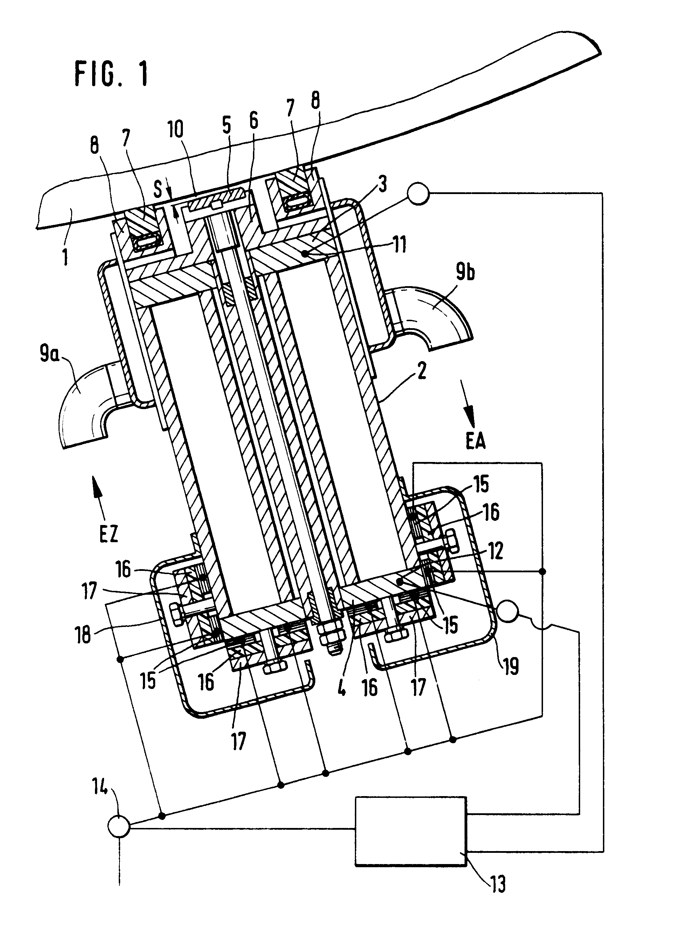

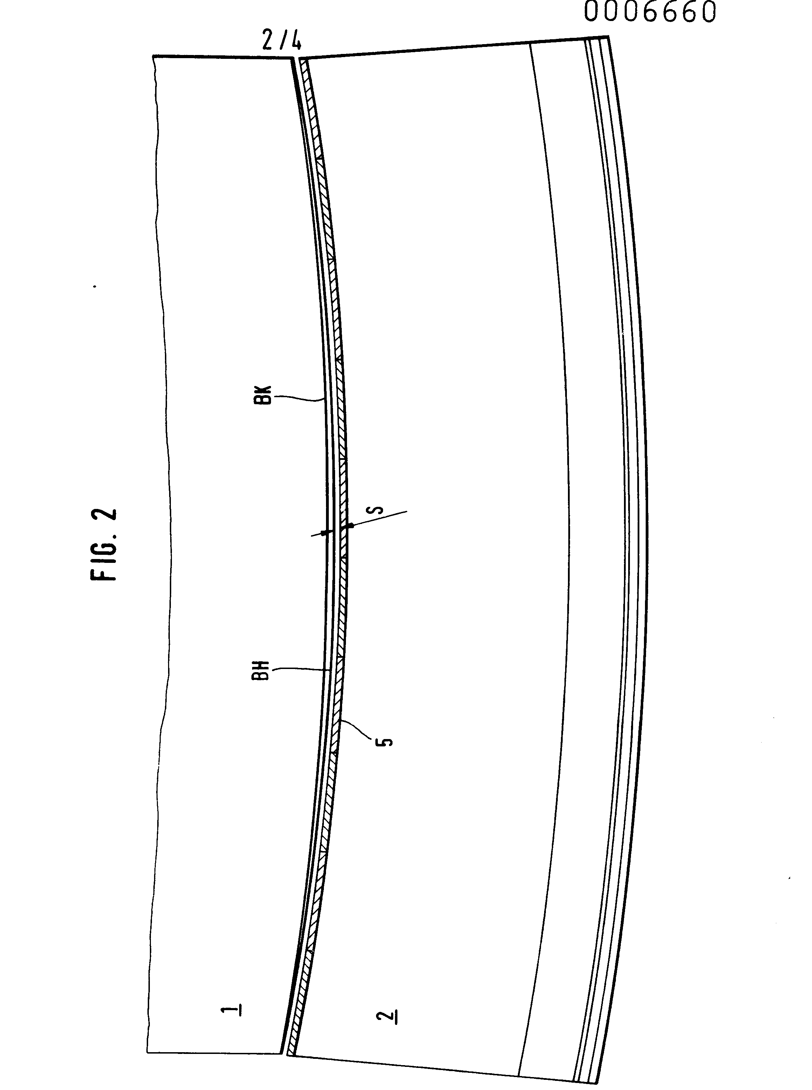

Der in den Fig. 1 und 2 dargestellte Elektroschaber ist an dem nur abschnittsweise dargestellten Glättzylinder 1 einer im übrigen nicht dargestellten Papiermaschine angeordnet. Der Schaber weist einen insgesamt mit 2 bezeichneten Schaberbalken auf mit vorderen, dem Zylinder 1 zugewandten Endplatten 3 und hinteren vom Zylinder 1 abgewandten Endplatten 4. Vor den Endplatten 3 ist über eine Halterung 6 eine Platinelektrode 5 am Schaberbalken 2 angeordnet. Zu beiden Seiten der Platinelektrode 5 sind Dichtkissen 7 über Halterungen 8 mit dem Schaberbalken 2 verbunden. In der Darstellung nach Fig. 1 ist der Elektroschaber an die Oberfläche des Zylinders 1 angesetzt. Dabei liegen die Dichtkissen 7 an der Oberfläche des Zylinders 1 an, während sich die Platinelektrode 5 in einem bestimmten vorgegebenen Abstand S von der Zylinderoberfläche befindet. Dieser Abstand beträgt ca. 3 bis 8 mm.

Der Raum 10 zwischen der Platinelektrode 5 bzw. ihrer Halterung 6 einerseits und der Oberfläche des Zylinders 1 andererseits ist mit einem Zufluß 9a und einem Abfluß 9b für einen Elektrolyt verbunden. Der Elektrolyt strömt im Betrieb in Pfeilrichtung EZ in den Zufluß 9a ein und in Pfeilrichtung EA aus dem Abfluß 9b aus. Dabei wird der Raum 10 und insbesondere der Bereich zwischen der Platinelektrode 5 und der Oberfläche des Zylinders 1 mit sich ständig erneuerndem Elektrolyt gefüllt.

In Fig. 2 ist die Bombierung des Glättzylinders 1 und die entsprechende Durchbiegung des Elektroschabers erläutert. Dabei ist der Deutlichkeit wegen Bombierung und Durchbiegung stark übertrieben dargestellt.

Die Bombierung BK des Glättzylinders 1 vergrößert sich im Betrieb, so daß an den mit Dampf aufgeheizten und von der Papierbahn bedeckten Stellen schließlich eine Zylinderdurchbiegung BH erreicht wird. Die entsprechende Durchbiegung der Elektrode 5 muß nun so angepaßt werden, daß der Spalt S zwischen der Elektrode 5 und der Oberfläche des Zylinders 1 einen fest vorgegebenen Wert nicht unterschreitet. Da sich der Schaberbalken 2 an der dem Glättzylinder 1 zugewandten Seite infolge der Aufheizung des Elektrolyten stark erwärmt, beispielsweise auf eine Temperatur von 100°C, während die Rückseite des Schaberbalkens 2 sich weit weniger stark erwärmt, beispielsweise lediglich auf eine Temperatur von 30°C, entsteht an der dem Glättzylinder 1 zugewandten Seite des Schaberbalkens eine sehr viel stärkere Längenausdehnung als an der dem Glättzylinder 1 abgewandten Seite. Dies hat zur Folge, daß der Schaberbalken die Tendenz hat, sich in Richtung auf den Glättzylinder 1 hin durchzubiegen, was zur Folge hat, daß die Anpassung der Durchbiegung der Elektroden 5 an die Zylinderdurchbiegung BH reduziert wird, in dem sich entweder die Breite des Spaltes S an den beiden Enden des Schaberbalkens 2 vergrößert oder in der Mitte verkleinert.

Um dies zu verhindern, dient die im folgenden beschriebene Einrichtung.

An der dem Glättzylinder 1 abgewandten Seite des Schaberbalkens 2, also den hinteren Endplatten 4 und am hinteren Teil der Seitenwände des Schaberbalkens 2 sind außen auf die Oberfläche Heizbänder 15 aufgelegt, die von außen über Halterungen 17 unter Zwischenschaltung einer Isolation 16 gehaltert sind. Weiterhin ist in einer Bohrung der vorderen Endplatte 3 ein erster elektrischer Temperaturfühler 11 und in einer Bohrung der hinteren Endplatte 4 ein zweiter elektrischer Temperaturfühler 12 angeordnet. Die beiden Temperaturfühler 11 und 12 sind elektrisch mit einem Regelkreis 13 verbunden. Dieser erzeugt ein von der Differenz der beiden durch die Fühler 11 und 12 gemessenen Temperaturwerte abhängiges Steuersignal, das einer Steuervorrichtung 14 zugeführt wird, welche den den elektrisch beheizbaren Heizbändern 15 zugeführten Heizstrom regelt.

Wenn nun sich infolge der Aufheizung des Elektrolyten die Vorderseite des Schaberbalkens 2 stärker zu erwärmen droht als die Rückseite und dem Regelkreis 13 eine entsprechende Temperaturdifferenz gemeldet wird, wird über die Heizbänder 15 die Rückseite des Schaberbalkens 2 ebenfalls aufgeheizt, solange bis eine vorgegebene geringere Temperaturdifferenz wieder erreicht ist. Damit wird eine zusätzliche, störende Durchbiegung des Schaberbalkens wieder ausgeregelt.

Zur genauen Einstellung des Regelkreises ist es erforderlich, daß durch entsprechende Versuche und/oder Berechnungen einerseits die Durchbiegung des Glättzylinders im Betrieb und andererseits die natürliche Durchbiegung des Schaberbalkens bei verschiedenen Temperaturen bestimmt wird. Wenn die Differenz der beiden Durchbiegungen am Glättzylinder und am Schaberbalken in Abhängigkeit von der Temperatur bekannt ist, kann die zulässige Temperaturdifferenz zwischen Vorder- und Rückseite des Schaberbalkens ermittelt und entsprechend am Regelkreis eingestellt werden. Es ist dabei zweckmäßig, einen an sich bekannten Verhältnisregler mit PID-Verhalten zu verwenden. Die Führungsgröße der Regelstrecke ist die Elektrolyttemperatur, die mittels des Temperaturfühlers 11 erfaßt wird. Der Regelkreis gestattet die Steuerung des Heizstromes in einem einstellbaren Verhältnis, beispielsweise 0,5 bis 1,5 : 1. Die Auslegung und Leistung der Heizbänder richtet sich nach dem Materialgewicht des Schaberbalkens. Um Abstrahlverluste gering zu halten, sind die Stellen des Schaberbalkens, an denen Heizbänder aufgelegt sind, mit Schutzgehäusen 18, 19 umgeben.

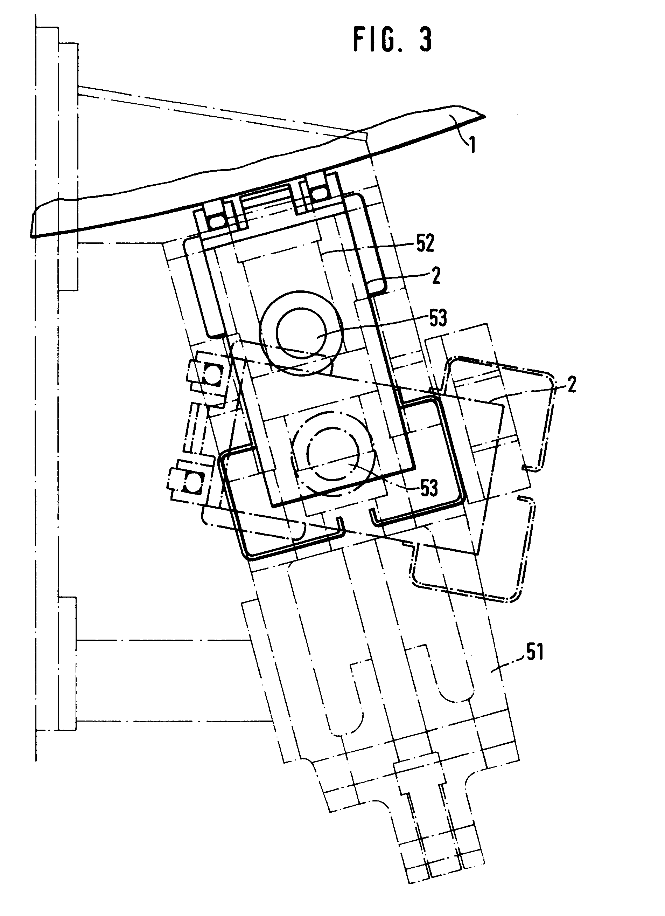

In Fig. 3 ist der Elektroschaber nach Fig. 1 noch einmal in vereinfachter Weise, ohne die Einrichtung zur Messung der Temperaturdifferenz und zur Heizung des Schaberbalkens, dargestellt, zur Erläuterung einer in Fig. 1 nicht dargestellten Schwenkvorrichtung für den Schaberbalken.

Gemäß Fig. 3 ist der Schaberbalken 2 in einem Führungsrahmen 51 verschiebbar geführt. Die Verschiebung erfolgt über einen mit dem Schaberbalken 2 verbundenen Hydraulikzylinder 52. Beim Abschwenken wird der Schaberbalken zunächst in Richtung der Schienen des Führungsrahmens 51 vom Glättzylinder 1 weggeschoben und dann um eine Drehachse 53 in die in Fig. 3 strichpunktiert eingezeichnete Kippstellung gedreht.

Die Steuerung des An- und Abschwenkens des Schaberbalkens 2 kann über eine nicht dargestellte Steuervorrichtung auch in Gefahrenzuständen automatisch erfolgen, beispielsweise wenn bestimmte Grenzwerte der gemessenen Temperaturdifferenzen über- oder unterschritten werden oder wenn der Heizstrom für die Heizbänder ausfällt oder einen vorgegebenen Wert unterschreitet.

Es hat sich aber gezeigt, daß der oben beschriebene Regelkreis so rasch anspricht, daß auch bei einem eingangs erwähnten Papierbahnabriß eine rechtzeitige Ausregelung der zusätzlichen Durchbiegung des Schaberbalkens 2 erfolgt, so daß in diesem Falle ein Abschwenken des Schaberbalkens nicht erforderlich ist.

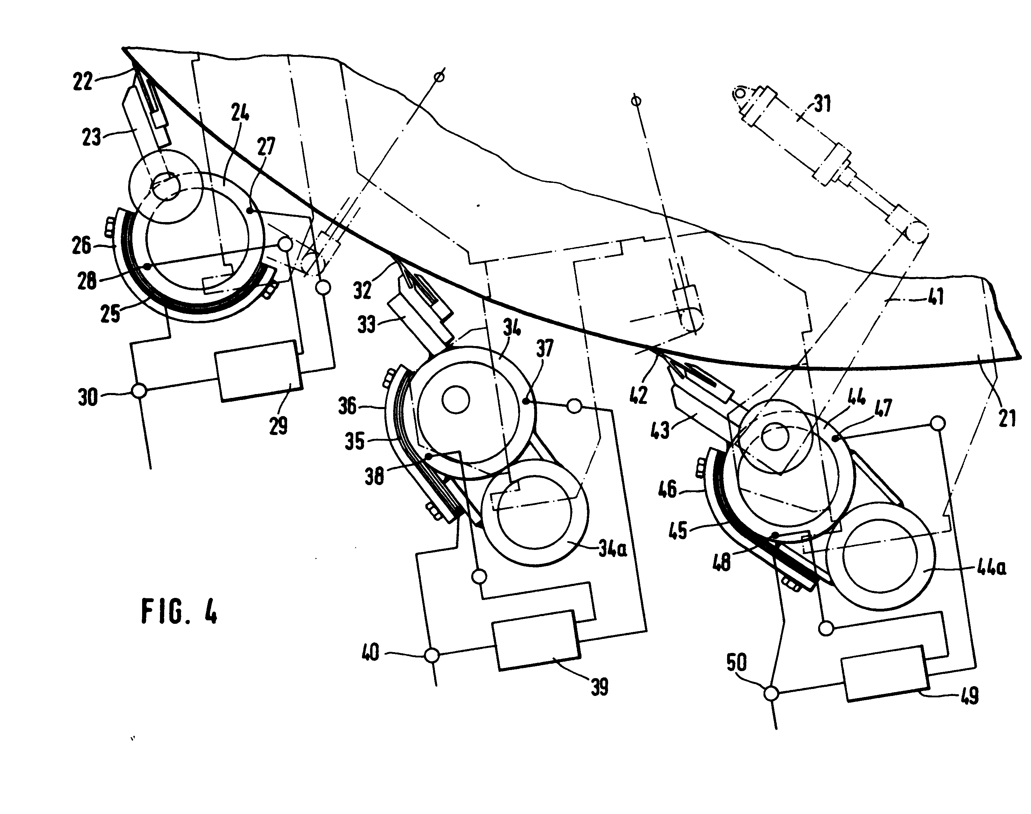

Bei der Ausführungsform nach Fig. 4 sind an einem ebenfalls nur abschnittsweise dargestellten Glättzylinder 21 einer nicht dargestellten Papiermaschine drei mechanische Schaber hintereinander angeordnet. Es sind auch bei dieser Darstellung nur die für die Erfindung wesentlichen Teile dargestellt, während andere Teile, insbesondere der Maschinenständer und die Schwenkvorrichtungen für die Schaber, nicht oder nur andeutungsweise dargestellt sind.

Der erste Schaber besitzt einen Schaberbalken 24, an dem über eine Halterung 23 eine Schaberklinge 22 angeordnet ist. Der zweite Schaber besitzt einen Schaberbalken 34 mit Verstärkung 34a, an dem über eine Halterung 33 eine Schaberklinge 32 angeordnet ist. Der dritte Schaber besitzt einen Schaberbalken 44 mit Verstärkung 44a, an dem über eine Halterung 43 eine Schaberklinge 42 angeordnet ist. Weiterhin ist an diesem Schaber eine Schwenkvorrichtung zum An- und Abschwenken des Schabers an die Oberfläche des Glättzylinders 21 dargestellt, die einen Hydraulikzylinder 31 aufweist, der einen Schwenkhebel 41 betätigt. Selbstverständlich können derartige Schwenkvorrichtungen auch in nur angedeuteter Weise am ersten und zweiten Schaber angeordnet sein.

Alle drei Schaber erwärmen sich durch Wärmeabstrahlung vom Glättzylinder 21 her an der dem Glättzylinder zugewandten Seite während des Betriebes der Vorrichtung einseitig. Um die hierdurch verursachte zusätzliche Durchbiegung der Schaberbalken 24, 34 und 44 auszugleichen, ist jeweils an den vom Glättzylinder 21 abgewandten Seiten der Schaber eine Heizvorrichtung angeordnet. Auf den Schaberbalken 24 ist ein Heizband 25 mit einer Halterung 26, auf den Schaberbalken 34 ein Heizband 35 mit einer Halterung 36 und auf den Schaberbalken 44 ein Heizband 45 mit einer Halterung 46 aufgelegt. In den Schaberbalken sind jeweils an der dem Glättzylinder 21 zugewandten Seite elektrische Temperaturfühler 27, 37, 47 und an der vom Glättzylinder abgewandten Seite elektrische Temperaturfühler 28, 38, 48 angeordnet. Die einander zugeordneten Temperaturfühler 27, 28 bzw. 37, 38 oder 47, 48 sind jeweils mit einem elektrischen Regelkreis 29, 39 oder 49 verbunden. Die elektrischen Regelkreise 29, 39 und 49 liefern in der bereits beschriebenen Weise die von den gemessenen Temperaturdifferenzen abhängigen Steuersignale und steuern damit über Steuervorrichtungen 30, 40 und 50 den Heizstrom für die Heizbänder 25, 35 und 45.

Die Einstellung der Regler 29, 39 und 49 erfolgt analog der oben beschriebenen Weise bei dem Ausführungsbeispiel nach den Fig. 1 und 2 nach entsprechender Untersuchung des Verhaltens der Schaberbalken 24, 34, 44 bei einseitiger Erwärmung und der sich ändernden Durchbiegung des Glättzylinders 21.

Auch bei der zuletzt beschriebenen Ausführungsform kann es zweckmäßig sein, wenn zusätzlich in nicht dargestellter Weise Steuervorrichtungen für die Vorrichtung zum An- und Abschwenken der Schaberbalken in Bezug auf die Walze vorgesehen sind. Diese Steuervorrichtungen können entweder in nicht eigens dargestellter Weise an den Regelkreis angeschlossen sein, so daß das An- und Abschwenken in Abhängigkeit vom Unter- bzw. Überschreiten eines vorgegebenen Wertes der gemessenen Temperaturdifferenz erfolgt, oder sie können an eine Vorrichtung zur Überwachung des den Heizbändern zugeführten Heizstromes angeschlossen sein, so daß ein Abschwenken des Schaberbalkens beim Unterschreiten eines vorgegebenen Wertes des Heizstromes erfolgt. Auf diese Weise kann verhindert werden, daß beim Ausfallen der Vorrichtung oder besonderen Gefahrensituationen eine Beschädigung des Schabers oder des Glättzylinders auftritt.

P a t e n t a n s p r ü c h e

1. Verfahren zur Einstellung und Aufrechterhaltung einer bestimmten Durchbiegung des Schaberbalkens an einem, an einer seiner Längsseiten einer einseitigen Erwärmung ausgesetzten, an einer Walze, insbesondere einem Glätt- oder Trockenzylinder einer Papiermaschine, angeordneten Schaber, dadurch gekennzeichnet, daß jeweils an mindestens einem Punkt der größerer Erwärmung ausgesetzten Seite und mindestens einem Punkt der geringerer Erwärmung ausgesetzten Seiten des Schaberbalkens die Temperatur gemessen und die Temperaturdifferenz bzw. - differenzen zwischen den Punkten auf diesen Seiten bestimmt wird und mindestens Teile der geringerer Erwärmung ausgesetzten Seiten des Schaberbalkens in Abhängigkeit von mindestens einer der gemessenen Temperaturdifferenzen aufgeheizt werden, bis mindestens eine der gemessenen Temperaturdifferenzen einen vorgegebenen Wert erreicht.

2. Einrichtung zur Durchführung des Verfahrens nach Anspruch 1, dadurch gekennzeichnet, daß am oder im Schaberbalken (2, 24, 34, 44) an einer Stelle, die großer Erwärmung ausgesetzt ist, mindestens ein erster elektrischer Temperaturfühler (11, 27, 37, 47) und an einer Stelle, die geringerer Erwärmung ausgesetzt ist, mindestens ein zweiter elektrischer Temperaturfühler (12, 28, 38, 48) angeordnet ist und die beiden Temperaturfühler mit einem elektrischen Regelkreis (13, 29, 39, 49) verbunden sind, der ein von der gemessenen Temperaturdifferenz abhängiges Steuersignal erzeugt, mit dem ein elektrischer Heizkreis (14, 30, 40, 50) angesteuert wird, der ein oder mehrere Heizbänder (15, 25, 35, 45) aufweist, die an vorgegebenen geringerer Erwärmung ausgesetzten Stellen an der Außenseite des Schaberbalkens (2, 24, 34, 44) angeordnet sind.

3. Einrichtung nach Anspruch 2, dadurch gekennzeichnet, daß die Heizbänder (15, 25, 35, 45) an der der Walze (1, 21) abgewandten Seite des Schaberbalkens (2, 24, 34, 44) angeordnet sind.

4. Einrichtung nach Anspruch 2 oder 3 an einem Elektroschaber, dadurch gekennzeichnet, daß der erste Temperaturfühler (11) im vorderen Teil des Schaberbalkens (2) in unmittelbarer Nähe des Elektrolytkreislaufes (10) angeordnet ist, während der zweite Temperaturfühler (12) im hinteren Teil des Schaberbalkens (2) an einer Stelle mit möglichst großem Abstand zum Elektrolytkreislauf (10) angeordnet ist.

5. Einrichtung nach einem der Ansprüche 2 bis 4, dadurch gekennzeichnet, daß die mit Heizbändern (16) versehenen Teile des Schaberbalkens (2) von einem Schutzgehäuse (18, 19) gegen Wärmeabstrahlung umgeben sind.

0006660

6. Einrichtung nach einem der Ansprüche 2 bis 5, gekennzeichnet durch eine Vorrichtung (51-53) zum An- und Abschwenken des Schaberbalkens (2) in Bezug auf die Walze (1), welche durch eine Steuervorrichtung betätigt wird, die an den Regelkreis (13) angeschlossen ist und bei der das An- und Abschwenken in Abhängigkeit von der Unter- bzw. Überschreitung vorgegebener Werte der gemessenen Temperaturdifferenzen erfolgt.

7. Einrichtung nach einem der Ansprüche 2 bis 6, gekennzeichnet durch eine Vorrichtung (51-53) zum An- und Abschwenken des Schaberbalkens (2) in Bezug auf die Walze (1), welche durch eine Steuervorrichtung betätigt wird, die an eine Vorrichtung zur Überwachung des den Heizbändern (15) zugeführten Heizstromes angeschlossen ist und bei der das Abschwenken des Schaberbalkens beim Unterschreiten eines vorgegebenen Wertes des Heizstromes erfolgt.

8. Einrichtung nach Anspruch 7, dadurch gekennzeichnet, daß der Heizstrom jedes einzelnen Heizbandes (15) gemessen wird und das Abschwenken des Schaberbalkens (2) beim Ausfall eines Heizbandes erfolgt.

FIG. 1

0006660

1 / 4

FIG. 2

FIG. 3

FIG. 4

0999000

4/4

**Europäisches Patentamt**

**EUROPÄISCHER RECHERCHENBERICHT**

0006660

Nummer der Anmeldung

EP 79 20 0318

| | EINSCHLÄGIGE DOKUMENTE | | | KLASSIFIKATION DER ANMELDUNG (Int.Cl.³) |
|---|---|---|---|---|
| Kategorie | Kennzeichnung des Dokuments mit Angabe, soweit erforderlich, der maßgeblichen Teile | | betrifft Anspruch | D 21 G 3/00 G 05 D 23/19 |
| A | FR - A - 1 232 191 (BIRD) <br><br> * Das ganze Dokument * <br><br> ---- | | 1 | |

**RECHERCHIERTE SACHGEBIETE (Int. Cl.²)**

D 21 B
G 05 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-09-1979 | DE RIJCK |

EPA form 1503.1 06.78